# FASCICULE DE BREVET EUROPEEN

(11) **EP 0 796 191 B1**
(45) Date de publication et mention de la délivrance du brevet: **15.04.1998**
(21) Numéro de dépôt: 95934202.3
(22) Date de dépôt: 12.10.1995
(51) Int. Cl.: B60T 13/567

(54) **SERVOMOTEUR A ENVELOPPE DEFORMABLE**
SERVOMOTOR MIT VERFORMBAREM MANTEL
SERVO COMPRISING A DEFORMABLE BODY

(30) Priorité: 09.12.1994 FR 9414808
(43) Date de publication de la demande: 24.09.1997
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9501328
(87) Numéro de publication internationale: WO9617760

(56) Documents cités:
- EP-A- 0 331 535
- FR-A- 2 440 295

## Description

La présente invention concerne un servomoteur pneumatique d'assistance au freinage pour véhicule à moteur, comprenant une enveloppe rigide séparée en au moins une chambre avant et une chambre arrière au moyen d'une cloison mobile l'enveloppe comprenant une coquille avant formant paroi pour la chambre avant et tournée vers l'avant du véhicule, et une coquille arrière formant paroi pour la chambre arrière et tournée vers l'arrière de ce véhicule, ce servomoteur comprenant en outré au moins un tirant fixé avant et arrière coquilles par des forces de cohésion respectives et reliant l'une à l'autre ces deux coquilles suivant une direction axiale pour exercer sur elles un effort de compression qui tend à les rapprocher, la force de cohésion entre le tirant et la coquille avant étant intégralement constituée par une force élastique exercée par l'enveloppe rigide sur ce tirant en réaction à l'effort de compression exercé par ce tirant sur les coquilles.

Des servomoteurs de ce type sont connus dans l'art antérieur, et un exemple particulier en est donné dans le brevet EP-B-0 331 535.

L'invention présentée repose sur la mise en évidence du fait que les servomoteurs à tirants, bien qu'offrant l'avantage de montrer une rigidité globale très satisfaisante pour une épaisseur relativement faible de l'enveloppe, présentent aussi l'inconvénient de pouvoir transmettre vers le conducteur des efforts très importants en cas de choc frontal accidentel du véhicule, et le but de l'invention consiste précisément à concilier les avantages et les inconvénients de ce type de servomoteurs.

A cette fin, le servomoteur de l'invention est essentiellement caractérisé en ce que le tirant présente une extrémité filetée traversant la coquille avant, et le tirant et la coquille avant sont assujettis l'un à l'autre par le seul effet d'un écrou vissé sur l'extrémité du tirant à l'extérieur de la coquille avant.

Grâce à cet arrangement, non seulement la coquille avant du servomoteur peut, en cas de choc, se déformer sans transmettre d'effort important vers le conducteur à travers le ou les tirants, mais elle assure même, par sa déformation, l'absorption d'une quantité d'énergie cinétique qui peut être contrôlée par le vissage de l'écrou sur le tirant.

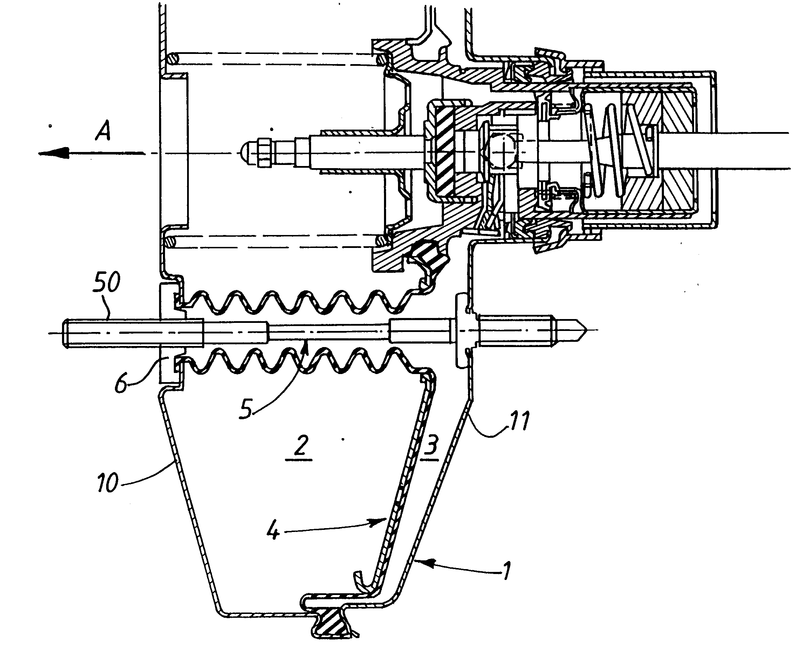

D'autres caractéristiques et avantages de l'invention ressortiront clairement de la description qui en est faite ci-après, à titre indicatif et nullement limitatif, en référence à la la figure unique qui est une vue en coupe partielle d'un servomoteur conforme à l'invention.

Comme le montre cette figure, l'invention concerne un servomoteur pneumatique d'assistance au freinage pour véhicule à moteur, comprenant une enveloppe rigide 1 séparée en au moins une chambre avant 2 et une chambre arrière 3 au moyen d'une cloison mobile 4.

Plus précisément, l'enveloppe 1 comprend une première coquille 10 formant paroi pour la chambre avant et tournée vers l'avant du véhicule, et une seconde coquille 11 formant paroi pour la chambre arrière 3 et tournée vers l'arrière de ce véhicule.

Les coquilles 10, 11 sont serties l'une sur l'autre et reliées l'une à l'autre par au moins un et de préférence deux tirants, tels que 5, ces tirants étant orientés suivant une direction axiale A et prévus pour exercer sur les coquilles 10, 11 un effort de compression qui tend à les rapprocher et les plaquer l'une contre l'autre.

Chaque tirant est fixé aux première et seconde coquilles par des forces de cohésion respectives, ces forces de cohésion étant définies comme celles qu'il faut vaincre pour obtenir une dessolidarisation de ce tirant par rapport aux coquilles respectives, et la force de cohésion entre le ou au moins un tirant 5 et la coquille avant 10 étant intégralement constituée par une force élastique exercée par l'enveloppe rigide 1 sur ce tirant en réaction à l'effort de compression exercé par ce tirant sur les coquilles 10, 11 suivant la direction axiale A.

Selon l'invention le tirant 5 présente une extrémité filetée 50 traversant la coquille avant 10, et le tirant 5 et la coquille avant 10 sont assujettis l'un à l'autre par le seul effet d'un écrou 6 vissé sur l'extrémité 50 du tirant à l'extérieur de la coquille avant 10.

## Revendications

1. Servomoteur pneumatique d'assistance au freinage pour véhicule à moteur, comprenant une enveloppe rigide (1) séparée en au moins une chambre avant et une chambre arrière (2, 3) au moyen d'une cloison mobile (4), l'enveloppe comprenant une coquille avant (10) formant paroi pour la chambre avant et tournée vers l'avant du véhicule, et une coquille arrière (11) formant paroi pour la chambre arrière et tournée vers l'arrière de ce véhicule, ce servomoteur comprenant en outre au morts un tirant (5) fixé aux coquilles avant et arrière par des forces de cohésion respectives et reliant l'une à l'autre ces deux coquilles suivant une direction axiale (A) pour exercer sur elles un effort de compression qui tend à les rapprocher, la force de cohésion entre le tirant (5) et la coquille avant étant intégralement constituée par une force élastique exercée par l'enveloppe rigide sur ce tirant en réaction à l'effort de compression exercé par ce tirant sur les coquilles, caractérisé en ce que le tirant (5) présente une extrémité filetée (50) traversant la coquille avant, et en ce que le tirant et la coquille avant sont assujettis l'un à l'autre par le seul effet d'un écrou (6) vissé sur l'extrémité du tirant à l'extérieur de la coquille avant.

## Claims

1. Pneumatic brake booster for a motor vehicle, comprising a rigid casing (1) separated into at least one front chaser and one rear chamber (2, 3) by means of a movable partition (4), the casing comprising a front shell (10) forming a wall for the front chamber and pointing towards the front of the vehicle, and a rear shell (11) forming a wall for the rear chamber and pointing towards the rear of this vehicle, this booster further comprising at least one through bolt (5) fastened to the front and rear shells by respective cohesive forces and joining these two shells together in an axial direction (A) in order to exert on them a compressive force which tends to pull them together, the cohesive force between the through bolt (5) and the front shell wholly consisting of an elastic force exerted by the rigid casing on this through bolt in reaction to the compressive force exerted on the shells by this through bolt, characterized in that the through bolt (5) has a threaded end (50) passing through the front shell, and in that the through bolt and the front shell are held together by the sole effect of a nut (6) screwed onto the end of the through bolt outside the front shell.

## Patentansprüche

1. Pneumatischer Bremsunterstützungs-Servomotor für ein Kraftfahrzeug, mit einem starren Gehäuse (1), das mittels einer beweglichen Trennwand (4) in wenigstens eine vordere Kammer und eine hintere Kammer (2, 3) unterteilt ist, wobei das Gehäuse eine vordere Schale (10) aufweist, welche eine Wand für die vordere Kammer bildet und bezüglich des Fahrzeugs nach vorne gerichtet ist, und eine hintere Schale (11), welche eine Wand für die hintere Kammer bildet und bezüglich des Fahrzeugs nach hinten gerichtet ist, wobei dieser Servomotor außerdem wenigstens eine Spannstange (5) enthält, die an der vorderen und der hinteren Schale jeweils durch Kohäsionskräfte befestigt ist und diese beiden Schalen entlang einer axialen Richtung (A) miteinander verbindet, um auf diese eine Druckkraft auszuüben, welche die Schalen einander anzunähern sucht, wobei die Kohäsionskraft zwischen der Spannstange (5) und der vorderen Schale vollständig durch eine elastische Kraft gebildet ist, die von dem starren Gehäuse auf die Spannstange als Reaktion auf die Druckkraft ausgeübt wird, die von der Spannstange auf die Schalen ausgeübt wird, dadurch gekennzeichnet, daß die Spannstange (5) ein mit einem Gewinde versehenes Ende (50) aufweist, das die vordere Schale durchquert, und daß die Spannstange und die vordere Schale aneinander nur durch die Wirkung einer Mutter (6) befestigt sind, die auf das Ende der Spannstange außerhalb der vorderen Schale aufgeschraubt ist.
